# EUROPEAN PATENT SPECIFICATION

(11) **EP 3 915 819 B1**
(45) Date of publication and mention of the grant of the patent: **23.10.2024**
(21) Application number: 21176411.3
(22) Date of filing: 28.05.2021
(51) Int. Cl.: B60K 11/04, F01P 11/10

(54) **CONDITIONING ARRANGEMENT FOR A WORK VEHICLE**
KONDITIONIERUNGSANORDNUNG FÜR EIN ARBEITSFAHRZEUG
AGENCEMENT DE CONDITIONNEMENT POUR UN VÉHICULE DE TRAVAIL

(30) Priority: 28.05.2020 IT 202000012778
(43) Date of publication of application: 01.12.2021
(73) Proprietor: CNH Industrial Italia S.p.A., 10156 Torino (IT)
(72) Inventor: STEFANO, Fiorati, 44028 Poggio Renatico (Ferrara) (IT); LENZINI, Nicola, 41027 Pievepelago (IT); MOCERINO, Andrea, 43025 Palanzano (IT)
(74) Representative: CNH Industrial IP Department

(56) References cited:
- WO-A1-2010/130576
- WO-A1-2016/087545
- FR-A1- 3 085 892
- FR-A1- 3 093 348
- US-A1- 2014 318 735
- US-B1- 6 192 838

## Description

### TECHNICAL FIELD

The present invention concerns a conditioning arrangement and a related conditioning method, in particular for conditioning vehicular fluids, e.g. for a work vehicle such as an agricultural vehicle.

### BACKGROUND OF THE INVENTION

As known, the temperature of some fluids circulating in a work vehicle, such as an agricultural vehicle, is controlled by means of a conditioning arrangement.

Usually, the conditioning arrangement includes a plurality of fluid circuits through which respective fluids, e.g. water, oil, organic gases, air, fuel and the like are circulated and each brought in thermal contact with another fluid, normally air drawn from the outside of the vehicle, to exchange heat with the latter. Examples are shown in US6192838B1 and FR3085892A1

Typically, the heat exchanges take place within a plurality of radiators crossed by respective flows of ambient air.

In some agricultural vehicles, the radiators are provided at the front arranged in a series aligned according to the advancing direction of such agricultural vehicles.

Ahead of the series, a fan is arranged to generate a flow of fresh air through the radiators of the series, such that the fluids passing within the radiators may transfer heat to the flowing air.

To enhance the heat absorption capacity of the air flowing across the radiators, subcoolers are also provided in the spaces between the radiators, such that at least part of the heat absorbed by air is transferred to a subcooling fluid flowing in the subcoolers.

Although advantageous in terms of heat transfer performance, the presence of subcoolers renders the arrangement complex and expensive.

In the above context, the need is felt to simplify the conditioning arrangement without significantly decreasing the efficiency of the heat transfer from the fluids to the external air.

Another need that is felt is to downsize the radiators without losing transfer performance, in order to save weights and costs.

An object of the invention is to satisfy at least one of the above-mentioned needs, preferably in a simple and economic manner.

### SUMMARY OF THE INVENTION

The object is reached by a conditioning arrangement and a related conditioning method as claimed in the appended set of claims.

Dependent claims set out particular embodiments of the invention.

### BRIEF DESCRIPTION OF DRAWINGS

For a better understanding of the present invention, preferred embodiments are described in the following, by way of non-limiting examples, with reference to the attached drawings wherein:
- Figure 1 is a side view of a vehicle comprising a conditioning arrangement according to an embodiment of the invention,
- Figure 2 illustrates the conditioning arrangement of figure 1 in perspective and in an enlarged scale, and
- Figures 3 and 4 are perspective views of conditioning arrangements according to further respective embodiments of the invention.

### DETAILED DESCRIPTION OF THE INVENTION

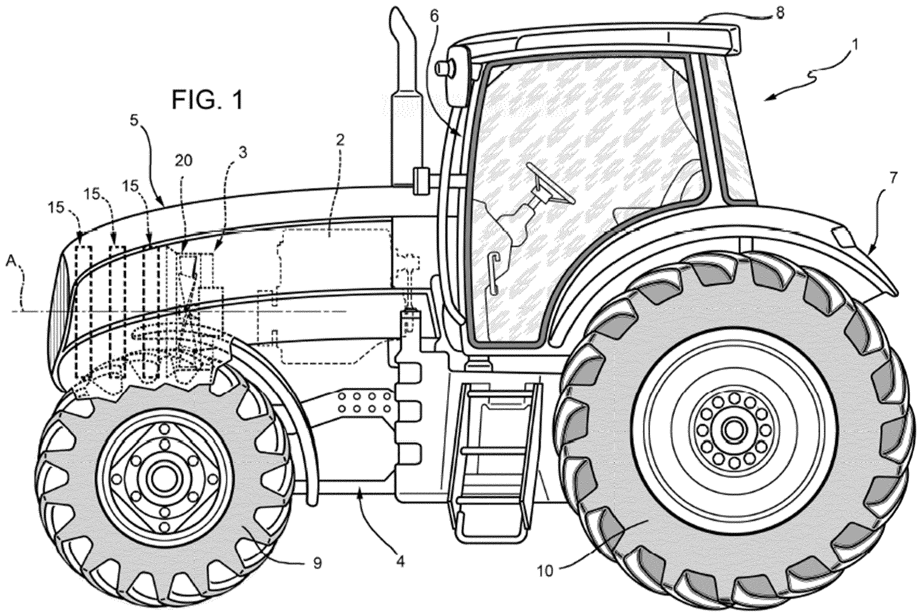

In Figure 1, reference numeral 1 indicates a work vehicle, in particular an agricultural vehicle provided, as known, with an engine 2 carried by a chassis 4 and a conditioning arrangement 3 arranged in the space defined by such chassis 4 and specifically adapted to cool the engine 2.

Vehicle 1 advances, in use, along to a direction A, according to which the chassis 4 defines a front portion 5, an intermediate portion 6, and a rear portion 7.

In particular, the intermediate portion 6 defines a cab 8 for a vehicle driver, whereas the front portion 5 and the rear portion 7 carry respectively front wheels 9 and rear wheels 10 of vehicle 1.

As usual, conditioning arrangement 3 define a plurality of circuits for respective first fluids and another circuit for a second fluid suitable for subtracting heat from the first fluids.

First fluids are brought in thermal contact with the second fluid to transfer heat thereto.

The circuit for the second fluid may be closed loop or an open circuit, as in the embodiments shown, which means that the second fluid is released in the environment after having absorbed heat from the first fluids and recharged from the environment as a fresh fluid charge.

In the specific case of the open circuit, the second fluid is the ambient air.

In the embodiments shown, the first fluids include a variety of distinct fluids, in particular a coolant for engine 2, lubricating oil for transmissions, an organic gas for conditioning cab 8, and compressed charge air for engine 2. The coolant for engine 2 may be a liquid at room temperature and pressure, such as water.

Figure 1 shows just a portion of each of the circuits for the first fluids at front portion 5 of vehicle 1, in particular where the heat exchanges occur between the first fluids and the second fluid. Here, conditioning arrangement 3 comprises a plurality of heat exchangers such as radiators 15 respectively adapted to be fed internally with the first fluids and thus making part of the circuits for those first fluids.

Some of the latter circuits are closed loop circuits, specifically the ones for the coolant, the lubricating oil, and the organic gas; on the other hand, the circuit for the compressed charge air is clearly an open circuit.

Radiators 15 are arranged in a series along direction A, namely specifically aligned along a common longitudinal axis with direction A, and supported in a fixed position by chassis 4, in particular front portion 5, as shown.

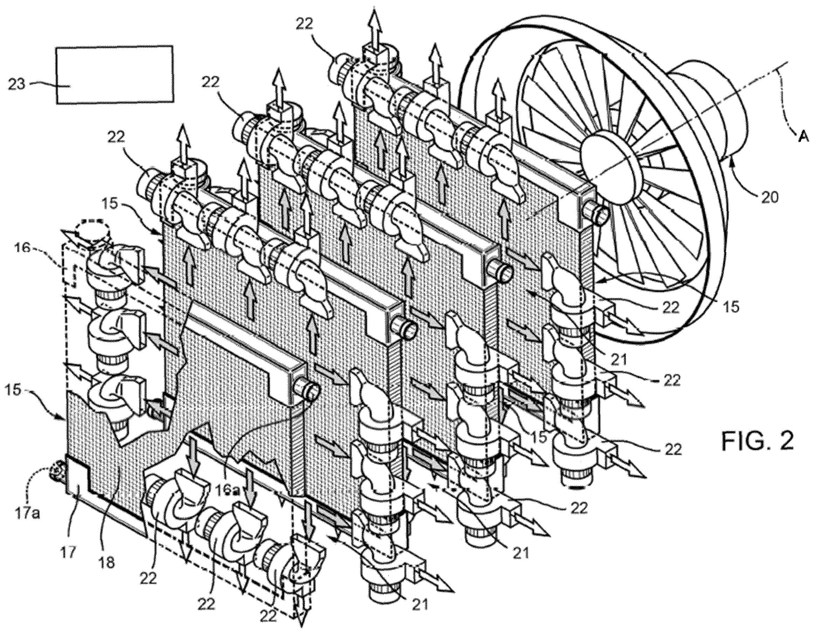

Each of the radiators 15 defines an internal flow path for the corresponding first fluid to be conditioned therein. In the exemplarily embodiment of Figure 2, each radiator 15 comprises an inlet tank 16 provided with a corresponding inlet opening 16a, an outlet tank 17 provided with a corresponding outlet opening 17a, and a pipe bundle 18 that connects the inlet tank 16 with the outlet tank 17.

More precisely, each inlet tank 16 is adapted to receive internally the corresponding first fluid fed through the relative inlet opening 16a and to distribute the received first fluid through the relative pipe bundle 18. Each outlet tank 17 is adapted to collect the corresponding first fluid distributed through the relative pipe bundle 18. The collected first fluid can be released through the corresponding outlet opening 17a.

Furthermore, in the same area of radiators 15, conditioning arrangement 3 comprises a device, in particular a ventilation device 20, e.g. a fan, to force the second fluid flowing through radiators 15, in particular along direction A and, then, to be ejected by ventilation device 20 out of the vehicle 1.

According to direction A, ventilation device 20 is placed ahead of the series of radiators 15, i.e. behind the first radiator 15 of the series. Ventilation device 20 is supported by chassis 4, in particular front portion 5 as shown.

Preferably, but not necessarily, the first radiator 15 is the one for the coolant; the second radiator 15 is the one for the lubricating oil; the third radiator 15 is the one for the charge air; lastly, the fourth radiator 15 is the one for the organic gas. The preferred order of the radiators 15 is due to the decreasing heat rejection of the first fluids according to direction A.

Before being supplied to the respective radiators 15, the coolant and the lubricating oil have taken heat respectively from engine 2 and the transmissions of vehicle 1; on the other hand, the organic gas and charge air have been heated by compression.

Ventilation device 20 forces the second conditioning fluid along direction A, such that the second fluid flows externally across pipe bundles 18 to come in thermal contact with the first fluids flowing internally through the same pipe bundles 18.

Direction A defines a flow path for the second fluid, which is specifically rectilinear although it may be different according to obvious not shown embodiments.

Any two following radiators 15 in the series define a space 21 there between, in which the second fluid flows along direction A.

According to an aspect of the invention, conditioning arrangement 3 comprises pumping devices 22, such as pumps or fans, to alter the amount of mass of the second fluid flowing in space 21.

More precisely, in the embodiment of Figure 2, the amount of mass is altered by suction of a portion of the second fluid flowing in space 21

In particular, pumping devices 22 are configured to suck out a portion of the second fluid from space 21, such that the flowing mass of heated second fluid due to the passage across one of radiators 15 is reduced.

More in particular, pumping devices 22 are placed within space 21 and discharge the sucked out second fluid into the environment. In the embodiment shown in Figure 2, pumping devices 22 are defined by a plurality of centrifugal fans.

Conditioning arrangement 3 further comprises a control unit 23, which is connected to pumping devices 22 and to ventilation device 20. Control unit 23 is configured to control pumping devices 22 and ventilation device 20 as well.

In detail, control unit 23 controls the amount of mass sucked out by each of the pumping devices 22 of the conditioning arrangement 3. In other words, each pumping device 22 is controlled by control unit 23 in an independent manner with respect to the other pumping devices 22.

Furthermore, control unit 23 controls ventilation device 20 to adjust the processed flow rate of the second fluid based on the amount of mass altered by pumping devices 22.

In particular, for each operating pumping device 22, the flow rate is accordingly adjusted such that the mass of second fluid forced along direction A is increased of the same amount of mass sucked out by that operating pumping device 22.

In such a manner, the total amount of mass flowing along direction A is conserved over time. Hence, a portion of the heated second fluid is replaced by cooler second fluid, such that an overall decrease of temperature within space 21 occurs with a contextual increased heat absorption capacity of the flowing second fluid along direction A.

An example of the operation of conditioning arrangement 3 according to the above embodiment is now described hereinafter.

The first fluids carrying heat, in particular subtracted from components like engine 2 and transmissions of vehicle 1, or produced during compression, is fed to inlet tanks 16 of the radiators 15 through inlet openings 16a. The first fluids flow through pipe bundles 18 and then leave the radiators 15 by the outlet openings 17a of the outlet tanks 17.

At the same time, ventilation device 20 is operated together with one or more pumping devices 22. Ventilation device 20 processes a flow rate that is equal for instance to a standard value stored in control unit 23 plus the total amount that will be sucked out by pumping devices 22.

The second fluid progressively heats up by meeting radiators 15, while accordingly the first fluids cool down on the other hand.

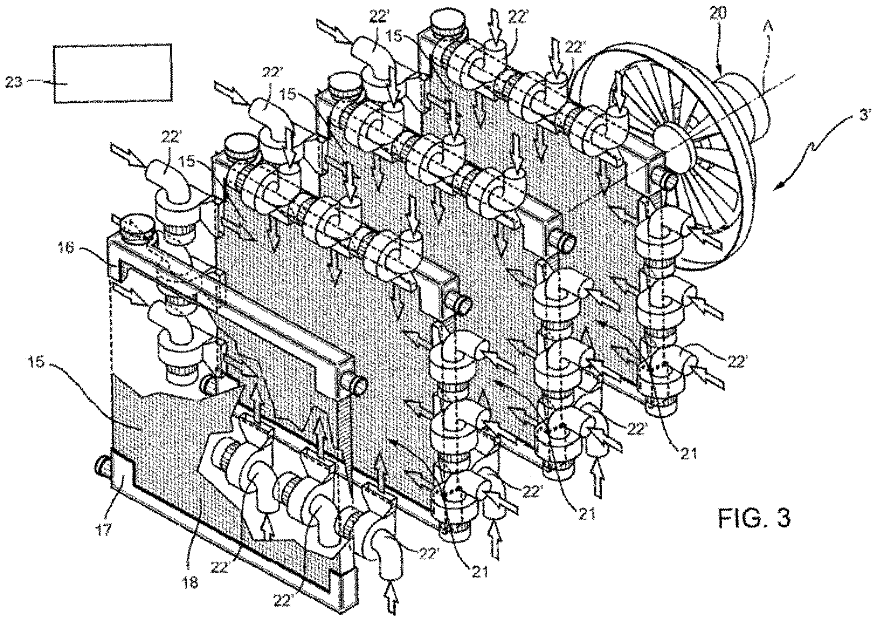

In Figure 3, reference numeral 3' indicates a conditioning arrangement according to another embodiment of the invention.

Conditioning arrangement 3' is similar to conditioning arrangement 3 and will be described hereinafter only as far as it differs therefrom; corresponding or equivalent parts of conditioning arrangements 3, 3' will be indicated where possible by the same reference numerals.

In particular, conditioning arrangement 3' differs from conditioning arrangement 3 for the replacement of pumping devices 22 with pumping devices 22', which are configured to take or admit further second fluid in space 21, such that the flowing mass of fresh second fluid between radiators 15 is increased.

Pumping devices 22' alter the amount of mass by intake of fresh second fluid in space 21.

More in particular, pumping devices 22' are placed within space 21 to charge the second fluid from the environment. In Figure 3, pumping devices 22' are defined by a plurality of centrifugal fans.

Control unit 23 controls the amount of mass taken in by each of the pumping devices 22'. Each pumping device 22' is controlled in an independent manner with respect to the other pumping devices 22'. Control unit 23 further controls ventilation device 20 to adjust the processed flow rate of the second fluid, in particular such that the mass of the second fluid forced along direction A is decreased of the same amount of mass taken in by each operating pumping device 22'.

In such a manner, the total amount of mass flowing along direction A is conserved over time. Hence, the heated second fluid due to the passage through one of radiators 15 mixes with fresh second fluid, such that the overall temperature within space 21 is mitigated with a contextual increase of the heat absorption capacity of the flowing second fluid along direction A.

In this embodiment, ventilation device 20 may be downsized, as shown, since it should process a lower flow rate of second fluid.

The operation of conditioning arrangement 3' is similar to that of conditioning arrangement 3 and is described only insofar as it differs therefrom.

In particular, the difference holds in that ventilation device 20 processes a flow rate that is equal for instance to the standard value minus the total amount that will be taken in by pumping devices 22'.

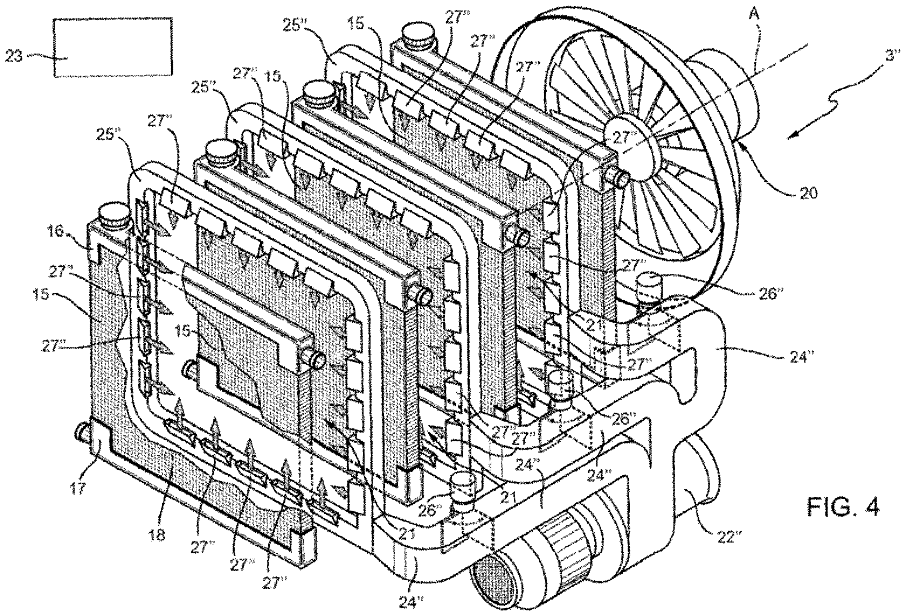

In Figure 4, reference numeral 3" indicates a conditioning arrangement according to a further embodiment of the invention.

Conditioning arrangement 3" is similar to conditioning arrangement 3' and will be described hereinafter only as far as it differs therefrom; corresponding or equivalent parts of conditioning arrangements 3, 3', and 3'' will be indicated where possible by the same reference numerals.

In particular, conditioning arrangement 3'' differs from conditioning arrangement 3' as comprising a single pumping device 22" instead of the plurality of pumping devices 22'.

Pumping device 22" is placed separately with respect to radiators 15, i.e. in a space different from spaces 21. However, pumping device 22" can alter the amount of mass flowing in spaces 21 thanks to a plurality of ducts 24" to bring respectively spaces 21 into communication with the space where pumping device 22" is placed.

Pumping device 22" is configured to displace an amount of second fluid through ducts 24'', in particular from the space where it is placed to spaces 21.

In the embodiment shown in Figure 4, each duct 24'' comprises an annular-shaped or frame-shaped portion 25'' surrounding a portion of a corresponding space 21 and provided with ports 27" configured to be open, e.g. selectively, towards the surrounded space 21. Portions 25' are respectively arranged in the corresponding spaces 21.

Moreover, each duct 24'' is provided with a corresponding valve 26'', e.g. an on-off valve or a control valve, to adjust the flow rate of the second fluid through the duct 24'' so as to allow fluidic communication of the corresponding space 21 with pumping device 22".

Control unit 23 is configured to control each valve 26'' in an independent manner with respect to the other valves 26''. Preferably, control unit 23 is also configured to control independently the opening of each of the ports 27".

The operation of conditioning arrangement 3'' is similar to that of conditioning arrangement 3' and is described only insofar as it differs therefrom.

The second conditioning fluid pumped by pumping device 22" splits into ducts 24'' based on the position of valves 26"; in case one of the valve 26" is open, the second fluid circulates within the relevant portion 25" and enters the corresponding space 21 to mix with the second fluid flowing along direction A.

In the following, a conditioning method using any one of the conditioning arrangements 3, 3', and 3" will be described as comprising the following steps:
- feeding the first fluids to radiators 15;
- forcing the second fluid to externally flow through radiators 15, such that heat exchanges occur between each of the first fluids and the second fluid;
- altering the amount of mass of the second fluid flowing between radiators 15;

In which the flow rate of the forced second fluid is adjusted based on the altered amount of mass.

Preferably, the alteration of the amount of mass may be performed by sucking out the second fluid or by admitting further second fluid between radiators 15.

More preferably, the alterations between two different couples of radiators 15 are performed independently of each other.

In view of the foregoing, the advantages of the conditioning arrangements 3, 3', 3", and of the method according to the invention are apparent.

Especially, the alteration of the mass flowing between radiators 15 and the relative compensation by adjusting the flow rate processed by ventilation device 20 provide for an overall reduction of the temperature of the flowing second fluid, such that the latter may absorb more heat from the first fluids.

In other words, the efficiency of the heat transfer is increased both in the case in which a portion of the second fluid is discharged in the environment from spaces 21, as well in the case wherein fresh second fluid is admitted in spaces 21.

Therefore, the presence of a subcooling circuit and of subcoolers as usual in the art is no longer needed and advantageously avoided, as in the embodiments shown.

Furthermore, radiators 15 may be downsized with cost, space, and weight savings.

It is clear that modifications can be made to the described conditioning arrangements 3, 3', 3'' that do not extend beyond the scope of protection defined by the claims.

For example, the number of pumping devices 22, 22', and 22" may be different with respect of that disclosed and illustrated in the drawings.

As well, the number of radiators 15 may be different. In particular, a fifth radiator 15 can be added, e.g. as the last of the series, for conditioning the fuel charge for engine 2.

Direction A defines an external flow path that may have any shape, e.g. curvilinear, instead of rectilinear. Furthermore, direction A may be the opposite of the advancing direction of vehicle 1.

Moreover, although the arrangements 3, 3', 3" are described as provided for conditioning a plurality of distinct fluids, a modified arrangement according to the invention can be provided when the first fluids are actually separate portions of a single fluid, e.g. the coolant for engine 2.

In this case, radiators 15 may be fluidically connected in series to each other in such a manner to define an internal flow path for the single fluid. In other words, a particle of the single fluid passes through each of the radiators 15, one after the other.

## Claims

1. A conditioning arrangement (3; 3'; 3") for a vehicle (1) comprising:
- a plurality of heat exchangers (15), including a first and a second heat exchanger, adapted to be fed with respective first fluids, and arranged in series along an external flow path (A) for a second fluid;
- fluid processing means (20) configured to force the second fluid flowing through the heat exchangers (15) along the external flow path, such that heat exchanges can occur between each of the first fluids and the second fluid;
- pumping means (22; 22'; 22", 24") configured to alter the amount of mass of the second fluid flowing between the first and the second heat exchanger; and
- a control unit (23) configured to control said pumping means (22; 22'; 22'', 24") to alter said amount of mass and said fluid processing means (20) configured to adjust the processed flow rate of the second fluid based on the altered amount of masswherein said pumping means (22; 22') comprises at least a first pumping device arranged along the external flow path (A) between the first and the second heat exchanger, the conditioning arrangement is **characterized in that** the heat exchangers (15) include a third heat exchanger with the second heat exchanger arranged between the first and the third heat exchanger;
wherein said pumping means (22; 22') comprises a second pumping device arranged along the external flow path between the second and the third heat exchanger;
the control unit (23) being configured to control the first pumping device in an independent manner with respect to the second pumping device.

2. The conditioning arrangement of claim 1, wherein said pumping means (22; 22'; 22", 24") are configured to alter the amount of mass by intake of further fluid in the external flow path (A) between the first and the second heat exchanger or by suction of a portion of the second fluid between the first and the second heat exchanger.

3. The conditioning arrangement of claim 2, wherein the control unit (23) is configured to control said fluid processing means (20) such that the mass of the second fluid forced along the external flow path (A) is increased or decreased of the same amount sucked out or taken in by said pumping means.

4. The conditioning arrangement of any of claims 1 to 3, wherein said pumping means (22", 24") comprise at least one duct (24") bringing a first space (21) between the first and the second heat exchanger in fluid communication with a second space distinct from the first space (21); the pumping means (22'', 24") further comprising a third pumping device (22") controllable for displacing the second fluid through said duct (24").

5. The conditioning arrangement of claim 4, further comprising a valve (26'') arranged in the duct (24") and controllable to adjust a flow of the second fluid through the duct (24").

6. The conditioning arrangement of claim 4 or 5, wherein the heat exchangers (15) include a third heat exchanger with the second heat exchanger arranged between the first and the third heat exchanger;
the pumping means (22'', 24") further comprising another duct (24'') bringing a third space (21) between the second and the third heat exchanger in fluid communication with the second space;
the pumping device (22", 24") being further controllable for displacing the second fluid through said another duct (24").

7. A conditioning method using the conditioning arrangement (3; 3'; 3") of any of the foregoing claims, the process comprising the steps of:
- feeding respective first fluids to the heat exchangers (15) ;
- forcing a second fluid to flow through the heat exchangers (15) along the external flow path (A), such that heat exchanges occur between each of the first fluids and the second fluid;
- altering the amount of mass of the second fluid flowing between the first and the second heat exchanger;
**characterized in that** the flow rate of the second fluid forced along the external path is adjusted based on the altered amount of mass.

8. The method of claim 7, wherein altering the amount of mass comprises sucking out the second fluid from the external flow path (A) or admitting further fluid in the external flow path (A).

9. The method of claim 7 or 8, further comprising the step of further altering the amount of mass of the second fluid flowing between the second heat exchanger and a third heat exchanger arranged such that the second heat exchanger is placed between the first and the third heat exchanger;
wherein the alterations are performed independently of each other.

## Patentansprüche

1. Konditionierungsanordnung (3; 3'; 3") für ein Fahrzeug (1), mit
- einer Mehrzahl von Wärmetauschern (15), umfassend einen ersten und einen zweiten Wärmetauscher, die dazu eingerichtet sind, mit jeweiligen ersten Fluiden gespeist zu werden, und die entlang einer externen Strömungsbahn (A) für ein zweites Fluid in Reihe angeordnet sind;
- einer Fluidverarbeitungsvorrichtung (20), die dazu eingerichtet ist, das zweite Fluid, das entlang der externen Strömungsbahn durch die Wärmetauscher (15) fließt, derart zu fördern, dass ein Wärmetauschvorgang zwischen jeweils den ersten Fluiden und dem zweiten Fluid erfolgen kann;
- einer Pumpeinrichtung (22; 22'; 22", 24"), die dazu eingerichtet ist, die Menge der Masse des zweiten Fluids, die zwischen dem ersten und dem zweiten Wärmetauscher strömt, zu verändern; und
- einer Steuereinheit (23), die dazu eingerichtet ist, die Pumpeinrichtung (22; 22'; 22", 24") zu steuern, um die Menge der Masse zu verändern, und wobei die Fluidverarbeitungsvorrichtung (20) dazu eingerichtet ist, die verarbeitete Strömungsgeschwindigkeit des zweiten Fluids auf Basis der veränderten Menge der Masse einzustellen, wobei die Pumpeinrichtung (22; 22') mindestens eine erste Pumpvorrichtung umfasst, die zwischen dem ersten und dem zweiten Wärmetauscher entlang der externen Strömungsbahn (A) angeordnet ist,
wobei die Konditionierungsanordnung **dadurch gekennzeichnet ist, dass** die Wärmetauscher (15) einen dritten Wärmetauscher umfassen, wobei der zweite Wärmetauscher zwischen dem ersten und dem dritten Wärmetauscher angeordnet ist;
wobei die Pumpeinrichtung (22; 22') eine zweite Pumpvorrichtung umfasst, die entlang der externen Strömungsbahn zwischen dem zweiten und dem dritten Wärmetauscher angeordnet ist; und
wobei die Steuereinheit (23) dazu eingerichtet ist, die erste Pumpvorrichtung unabhängig von der zweiten Pumpvorrichtung zu steuern.

2. Konditionierungsanordnung nach Anspruch 1, wobei die Pumpeinrichtung (22; 22'; 22", 24") dazu eingerichtet ist, die Menge der Masse durch die Aufnahme eines weiteren Fluids in der externen Strömungsbahn (A) zwischen dem ersten und dem zweiten Wärmetauscher oder durch Ansaugen eines Teils des zweiten Fluids zwischen dem ersten und dem zweiten Wärmetauscher zu verändern.

3. Konditionierungsanordnung nach Anspruch 2, wobei die Steuereinheit (23) dazu eingerichtet ist, die Fluidverarbeitungsvorrichtung (20) derart zu steuern, dass die Masse des zweiten Fluids, die entlang der externen Strömungsbahn (A) gefördert wird, um die gleiche Menge, die durch die Pumpvorrichtung abgesaugt oder aufgenommen wurde, erhöht bzw. verringert wird.

4. Konditionierungsanordnung nach einem der Ansprüche 1 bis 3, wobei die Pumpeinrichtung (22", 24") mindestens eine Leitung (24") aufweist, die einen ersten Raum (21) zwischen dem ersten und dem zweiten Wärmetauscher mit einem zweiten Raum, der von dem ersten Raum (21) verschieden ist, in Fluidverbindung bringt; wobei die Pumpeinrichtung (22", 24") weiterhin eine dritte Pumpvorrichtung (22") umfasst, die steuerbar ist, um das zweite Fluid durch die Leitung (24") zu fördern.

5. Konditionierungsanordnung nach Anspruch 4, weiterhin aufweisend ein Ventil (26"), das in der Leitung (24") angeordnet und steuerbar ist, um eine Strömung des zweiten Fluids durch die Leitung (24") einzustellen.

6. Konditionierungsanordnung nach Anspruch 4 oder 5, wobei die Wärmetauscher (15) einen dritten Wärmetauscher umfassen, wobei der zweite Wärmetauscher zwischen dem ersten und dem dritten Wärmetauscher angeordnet ist;
wobei die Pumpeinrichtung (22", 24") weiterhin eine weitere Leitung (24") aufweist, die einen dritten Raum (21) zwischen dem zweiten und dem dritten Wärmetauscher mit dem zweiten Raum in Fluidverbindung bringt;
wobei die Pumpeinrichtung (22", 24") weiterhin steuerbar ist, um das zweite Fluid durch die weitere Leitung (24") zu fördern.

7. Konditionierungsverfahren unter Verwendung der Konditionierungsanordnung (3; 3'; 3") nach einem der vorhergehenden Ansprüche, wobei das Verfahren die folgenden Schritte umfasst:
- Zuführen von jeweiligen ersten Fluiden den Wärmetauschern (15);
- Fördern eines zweiten Fluids, sodass es entlang der externen Strömungsbahn (A) derart durch die Wärmetauscher (15) strömt, dass Wärmetauschvorgänge zwischen jeweils den ersten Fluiden und dem zweiten Fluid erfolgen;
- Verändern der Menge der Masse des zweiten Fluids, die zwischen dem ersten und dem zweiten Wärmetauscher strömt, **dadurch gekennzeichnet, dass** die Strömungsgeschwindigkeit des zweiten Fluids, das entlang der externen Strömungsbahn gefördert wird, auf Basis der veränderten Menge der Masse eingestellt wird.

8. Verfahren nach Anspruch 7, wobei das Verändern der Menge der Masse das Absaugen des zweiten Fluids aus der externen Strömungsbahn (A) oder das Einleiten von weiterem Fluid in die externe Strömungsbahn (A) umfasst.

9. Verfahren nach Anspruch 7 oder 8, weiterhin umfassend den Schritt des weiteren Veränderns der Menge der Masse des zweiten Fluids, welches zwischen dem zweiten Wärmetauscher und einem dritten Wärmetauscher strömt, der derart angeordnet ist, dass der zweite Wärmetauscher zwischen dem ersten und dem dritten Wärmetauscher angeordnet ist, wobei die Veränderungen unabhängig voneinander durchgeführt werden.

## Revendications

1. Un dispositif de conditionnement (3 ; 3' ; 3") pour un véhicule (1) comprenant :
- une pluralité d'échangeurs de chaleur (15), comprenant un premier et un deuxième échangeur de chaleur, adaptés pour être alimentés par de premiers fluides respectifs, et disposés en série le long d'un circuit d'écoulement externe (A) pour un second fluide ;
- des moyens de traitement des fluides (20) configurés pour forcer le second fluide circulant à travers les échangeurs de chaleur (15) le long du circuit d'écoulement externe, de telle sorte que des échanges de chaleur peuvent se produire entre chacun parmi les premiers fluides et le second fluide ;
- des moyens de pompage (22 ; 22' ; 22" ; 24") configurés pour modifier la quantité de masse du second fluide circulant entre le premier et le deuxième échangeur de chaleur ; et
- une unité de commande (23) configurée pour commander lesdits moyens de pompage (22 ; 22' ; 22" ; 24") afin de modifier ladite quantité de masse et lesdits moyens de traitement de fluide (20) configurés pour ajuster le débit traité du second fluide en fonction de la quantité de masse modifiée, dans laquelle lesdits moyens de pompage (22 ; 22') comprennent au moins un premier dispositif de pompage disposé le long du circuit d'écoulement externe (A) entre le premier et le deuxième échangeur de chaleur, le dispositif de conditionnement étant **caractérisé en ce que** les échangeurs de chaleur (15) comprennent un troisième échangeur de chaleur avec le deuxième échangeur de chaleur agencé entre le premier et le troisième échangeur de chaleur ;
dans lequel lesdits moyens de pompage (22 ; 22') comprennent un deuxième dispositif de pompage agencé le long du circuit d'écoulement externe entre le deuxième et le troisième échangeur de chaleur ;
l'unité de commande (23) étant configurée pour commander le premier dispositif de pompage de manière indépendante par rapport au deuxième dispositif de pompage.

2. Le dispositif de conditionnement selon la revendication 1, dans lequel lesdits moyens de pompage (22 ; 22' ; 22" ; 24") sont configurés pour modifier la quantité de masse par admission de fluide supplémentaire dans le circuit d'écoulement externe (A) entre le premier et le deuxième échangeur de chaleur ou par aspiration d'une partie du second fluide entre le premier et le deuxième échangeur de chaleur.

3. Le dispositif de conditionnement selon la revendication 2, dans lequel l'unité de commande (23) est configurée pour commander lesdits moyens de traitement de fluide (20) de telle sorte que la masse du second fluide forcé le long du circuit d'écoulement externe (A) est augmentée ou diminuée de la même quantité aspirée ou admise par lesdits moyens de pompage.

4. Le dispositif de conditionnement selon l'une quelconque des revendications 1 à 3, dans lequel lesdits moyens de pompage (22", 24") comprennent au moins un conduit (24") mettant en communication fluidique un premier espace (21) entre le premier et le deuxième échangeur de chaleur avec un deuxième espace distinct du premier espace (21) ; les moyens de pompage (22", 24") comprenant en outre un troisième dispositif de pompage (22") pouvant être commandé pour déplacer le second fluide à travers ledit conduit (24").

5. Le dispositif de conditionnement selon la revendication 4, comprenant en outre une vanne (26") agencée au niveau du conduit (24") et pouvant être commandée pour ajuster un écoulement du second fluide à travers le conduit (24").

6. L'agencement de conditionnement selon la revendication 4 ou la revendication 5, dans lequel les échangeurs de chaleur (15) comprennent un troisième échangeur de chaleur avec le deuxième échangeur de chaleur agencé entre le premier et le troisième échangeur de chaleur ;
les moyens de pompage (22", 24") comprenant en outre un autre conduit (24") amenant un troisième espace (21) entre le deuxième et le troisième échangeur de chaleur en communication fluidique avec le deuxième espace ;
le dispositif de pompage (22", 24") étant en outre commandable pour déplacer le second fluide à travers ledit autre conduit (24").

7. Un procédé de conditionnement utilisant le dispositif de conditionnement (3 ; 3' ; 3") selon l'une quelconque des revendications précédentes, le procédé comprenant les étapes consistant à :
- alimenter les échangeurs de chaleur (15) en premiers fluides respectifs ;
- forcer un second fluide à circuler à travers les échangeurs de chaleur (15) le long du circuit d'écoulement externe (A), de telle sorte que des échanges de chaleur se produisent entre chacun des premiers fluides et le second fluide ;
- modifier la quantité de masse du second fluide circulant entre le premier et le deuxième échangeur de chaleur ; **caractérisé en ce que** le débit du second fluide forcé le long du circuit externe est ajusté en fonction de la quantité de masse modifiée.

8. Le procédé selon la revendication 7, dans lequel la modification de la quantité de masse comprend l'aspiration du second fluide à partir du circuit d'écoulement externe (A) ou l'admission d'un fluide supplémentaire dans le circuit d'écoulement externe (A).

9. Le procédé selon la revendication 7 ou la revendication 8, comprenant en outre l'étape consistant à modifier davantage la quantité de masse du second fluide circulant entre le deuxième échangeur de chaleur et un troisième échangeur de chaleur agencé de telle sorte que le deuxième échangeur de chaleur est placé entre le premier et le troisième échangeur de chaleur ; dans lequel les modifications sont effectuées indépendamment les unes des autres.
